(19) Europäisches Patentamt
European Patent Office
Office européen des brevets

(11) **EP 2 671 902 B1**

(12) **EUROPÄISCHE PATENTSCHRIFT**

(45) Veröffentlichungstag und Bekanntmachung des Hinweises auf die Patenterteilung:
**03.01.2018  Patentblatt 2018/01**

(51) Int Cl.:
***C08G 69/46*** *(2006.01)*   ***C08G 69/30*** *(2006.01)*
***C08G 69/06*** *(2006.01)*

(21) Anmeldenummer: **12170778.0**

(22) Anmeldetag: **05.06.2012**

(54) **POLYAMID-KONDITIONIERUNG**

POLYAMIDE CONDITIONING

CONDITIONNEMENT DE POLYAMIDE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**11.12.2013  Patentblatt 2013/50**

(73) Patentinhaber: **Polymetrix AG**
**9245 Oberbüren (CH)**

(72) Erfinder:
• **Christel, Andreas**
  **9524 Zuzwil (CH)**
• **Culbert, Brent Allan**
  **9500 Wil (CH)**

(74) Vertreter: **Hepp Wenger Ryffel AG**
**Friedtalweg 5**
**9500 Wil (CH)**

(56) Entgegenhaltungen:
WO-A1-2007/090602    WO-A1-2008/067680
WO-A1-2008/071023    WO-A1-2009/153340
GB-A- 1 110 277      US-A- 4 891 420

**Beschreibung**

Die vorliegende Erfindung betrifft ein Verfahren zur thermischen Behandlung von Polyamiden.

Polyamide werden aufgrund ihrer chemischen Beständigkeit und ihrer vorteilhaften Materialeigenschaften umfangreich eingesetzt, zum Beispiel als Fasern oder zur Herstellung von Rohren und Behältern. Üblicherweise werden Polyamide durch eine Schmelzpolykondensation aus den entsprechenden Monomeren hergestellt. Auf diese Weise können jedoch nur Polyamide mit einem bestimmten Molekulargewicht synthetisiert werden, da mit der Erhöhung des Molekulargewichts des Polyamids in der Schmelze gleichzeitig der thermische Abbau des Produkts in der Schmelze ansteigt. Um Polyamide mit höheren Molekulargewichten zu erhalten, wird ein durch Schmelzpolykondensation hergestelltes Polymergranulat einer Nachkondensation in der festen Phase unterzogen (auch als SSP-Reaktion (solid state polycondensation) bezeichnet).

Die SSP-Reaktion für Polykondensate wie Polyester oder Polyamide ist hinlänglich bekannt (vgl. z. B. Scheirs/Long (Hrsg.): Modern Polyesters, Wiley 2003, insb. S. 143-244; DE 195 10 698 A1; EP 1 981 931 B1; WO 03/062302 A1; US 5,597,888; WO 01/39947 A1). Hierbei wird das Polymergranulat auf eine entsprechende Temperatur unterhalb seines Schmelzpunktes erhitzt und das Reaktionsgleichgewicht durch Entfernung der Nebenprodukte (beispielsweise mit Hilfe eines das Granulat im Gegenstrom durchströmenden Prozessgases) zur Seite von Polyamiden mit höherem Molekulargewicht verschoben.

Versuche zur Optimierung der SSP-Reaktion für Polyamide sind in der Literatur beschrieben. Beispielsweise ist in der EP 1 981 931 B1 eine Vorgehensweise vorgeschlagen, mit welcher die Verweilzeiten des Polyamid-Granulats im SSP-Reaktor bis zum Erreichen des gewünschten Molekulargewichts sowie der Nebenproduktanteil (z. B. Monomere und Oligomere) im Produkt gesenkt werden sollen. Das Granulat wird hierbei einer zweistufigen Behandlung unterzogen. Die beiden Behandlungsstufen unterscheiden sich hinsichtlich des Feuchtigkeitsgehalts des eingesetzten Prozessgases (welches im ersten Schritt reiner Wasserdampf sein kann) sowie hinsichtlich der Reaktionstemperaturen und Verweilzeiten. In der ersten Stufe soll mit einem feuchten Prozessgas eine effiziente Entfernung von unerwünschten Nebenprodukten wie Oligomeren erreicht werden, während in der zweiten Stufe mit einem vergleichsweise trockenen Prozessgas gearbeitet wird, um einen möglichst hohen Anstieg des Molekulargewichts zu erzielen.

Nachteilig bei dieser Vorgehensweise ist die nach wie vor lange Verweilzeit, die in den Beispielen der EP 1 981 931 B1 immer noch über beide Stufen 20-30 h beträgt. Bei kontinuierlicher Durchführung des Verfahrens gemäss der EP 1 981 931 B1 sind daher grosse Konditionierer erforderlich.

In der EP 2 297 228 B1 ist ein kontinuierliches Verfahren zur mehrstufigen Trocknung und Nachkondensation von Polyamidgranulat beschrieben. Das Verfahren zeichnet sich dadurch aus, dass in der Nachkondensationsstufe das Prozessgas an mindestens zwei Stellen entlang des Reaktorschachtes (am Boden und in der oberen Hälfte unterhalb der Granulatoberfläche) zugeführt wird. Diese Vorgehensweise ist vergleichsweise aufwendig und erfordert den Einsatz einer grossen Menge an Prozessgas. Das Polyamidgranulat wird in die Vortrocknungsstufe mit einer Temperatur von mindestens 70 °C eingeführt. Die bei niedrigen Granulattemperaturen auftretenden Probleme sowie die Notwendigkeit einer effizienten Trocknung des Polyamidgranulats in der Trocknungsstufe werden in diesem Dokument nicht erkannt.

In der US-4,891,420 A ist ein Verfahren zum Tempern eines Granulats. Ein Verfahren zur effizienten Trocknung eines Polyamids auf einen Feuchtigkeitsgehalt von maximal 1 Gew.-% und die damit verbundenen Vorteile sind in diesem Dokument nicht beschrieben.

Es war die Aufgabe der vorliegenden Erfindung, die vorstehend beschriebenen Nachteile des Stands der Technik zu überwinden und ein Verfahren zur Konditionierung von Polyamid bereitzustellen, mit welchem das Molekulargewicht des Polyamids unabhängig von dessen Temperatur in einem vergleichsweise kleinen Reaktor effizient in einer SSP-Reaktion in vergleichsweise kurzer Zeit auf einen gewünschten Wert erhöht werden kann.

Erfindungsgemäss wird die vorstehende Aufgabe dadurch gelöst, dass die Geschwindigkeit (aber nicht die Gesamtmenge) des den Konditionierungsraum durchströmenden Prozessgases in nachstehend erläuterter Abstimmung mit den anderen wesentlichen Prozessparametern derart erhöht wird, dass es zu einer schnellen und effizienten Trocknung des Granulats auf einen Feuchtigkeitsgehalt von maximal 1 Gew.-% kommt. Es hat sich erfindungsgemäss gezeigt, dass ein derart effizient getrocknetes Polyamidgranulat in einer anschliessenden SSP-Stufe deutlich rascher als im Stand der Technik beschrieben auf einen gewünschtes Molekulargewicht angehoben werden kann, ohne dass es hierfür einer besonderen Apparatur mit mehreren Gaseinlässen wie in der EP 2 297 228 B1 beschrieben bedarf. Dies ist darauf zurückzuführen, dass das in den SSP-Reaktionsraum eingeführte, erfindungsgemäss vorbehandelte Polyamidgranulat derart wenig Feuchtigkeit aufweist, dass es zu keinem kondensationsbedingten temporären Temperaturabfall im SSP-Reaktionsraum kommt. Zudem kann die SSP-Reaktion mit deutlich weniger Prozessgas durchgeführt werden als beispielsweise aus der EP 2 297 228 B1 bekannt.

Es sollte erfindungsgemäss insbesondere bei der Konditionierung von kaltem Polyamidgranulat (d.h. Granulat mit z.B. Raumtemperatur) darauf geachtet werden, dass die Temperatur des Prozessgases zum Zeitpunkt des Austritts aus dem Konditionierungsraum über dem Taupunkt des Gases liegt. Es hat sich erfindungsgemäss gezeigt, dass eine Kondensatabscheidung aus dem Prozessgas und die damit verbundenen Druckspitzen sowie Verzerrungen des Verweilzeitspektrums vermieden werden können, wenn das Prozessgas eine derartige Geschwindigkeit im Konditionierer (nachstehend auch als erster Reaktionsraum bezeichnet) aufweist, dass es zu einer Auflockerung des Festbetts aus Polyamidpartikeln im Reaktor kommt. Unter derartigen Umständen ist der Wärmeaustausch zwischen Prozessgas und Polyamid so eingeschränkt, dass das Prozessgas beim Austritt aus dem Reaktor immer noch eine Temperatur oberhalb seines Taupunktes aufweist. Eine unerwünschte Kondensation von Wasser (und Monomeren) wird dadurch verhindert, ohne dass es ansonsten zu negativen Einflüssen auf die Konditionierung und die sich gegebenenfalls anschliessende SSP-Reaktion kommt. Im Stand der Technik wurde dieses Problem der Auskondensation des im Gas enthaltenen Wassers mit nachteiligen Folgen für den Konditionierungsschritt, das insbesondere bei niedriger Polymertemperatur auftritt, bislang nicht erkannt.

Die vorliegende Erfindung betrifft somit ein kontinuierliches Verfahren zur thermischen Behandlung eines Polyamids, umfassend die Schritte der Einführung von Polyamidpartikeln, welche einen Wassergehalt von 5 bis 20 Gew% bezogen auf das Trockengewicht der Partikel haben, in den oberen Bereich eines ersten Reaktionsraums und der Entnahme der Poly-amidpartikel aus einem unteren Bereich des ersten Reaktionsraums, wobei die Polyamidpartikel als Schüttgut beim Austritt aus dem ersten Reaktionsraum eine Temperatur im Bereich von 100 bis 195 °C und einen Wassergehalt von maximal 1 Gew.-% bezogen auf das Trockengewicht aufweisen, wobei die Polyamidpartikel während des gravimetrischen Absinkens durch den ersten Reaktionsraum im Gegenstrom mit einem Prozessgas kontaktiert werden, welches bei Eintritt in den ersten Reaktionsraum einen Wassergehalt von 0.8 bis 20 Gew.-% bezogen auf das Gesamtgewicht des Prozessgases sowie eine Temperatur von 100 °C bis 200 °C aufweist, dadurch gekennzeichnet, dass zumindest im unteren Bereich des ersten Reaktionsraumes das Verhältnis der Leerrohrgeschwindigkeit des Prozessgases zur Lockerungsgeschwindigkeit der Polyamidpartikel im Bereich von 0,7 bis 1.5 liegt und die Polyamidpartikel zumindest im unteren Bereich des ersten Reaktionsraumes als gelockertes Bett vorliegen, und dass das Verhältnis des Massenflusses des Prozessgases mg zum Massenfluss der Polyamidpartikel $m_p$ im Bereich von 3,0 bis 20,0, vorzugsweise von 3,8 bis 15,0 und besonders bevorzugt von 4,0 bis 10,0 liegt und die vorstehenden Parameter so gewählt werden, dass es zu keiner Auskondensation des Prozessgases im oberen Bereich des ersten Reaktionsraums kommt.

Die Leerrohrgeschwindigkeit $v_g$ eines Gases ist definiert als der Gasdurchsatz pro Querschnittsfläche des Behandlungsraumes:

$$v_g = \frac{V}{A} = \frac{m}{\rho \cdot \pi \cdot r^2}$$

Als Lockerungsgeschwindigkeit $V_l$ der Polyamidpartikel wird die Strömungsgeschwindigkeit bezeichnet, bei welcher sich eine Schüttung der Polyamidpartikel im ersten Reaktionsraum im Zustand der losesten Packung befindet. Unterhalb des Lockerungspunktes liegt die Schüttung aus Polyamidpartikeln als Festbett vor. Das Prozessgas bewegt sich mit geringer Geschwindigkeit durch die Hohlräume des porösen Festbetts, ohne dessen Packungsstruktur zu ändern. Erhöht man die Strömungsgeschwindigkeit des Prozessgases, kommt es zu einer zunehmenden Fluidisierung der Schüttung (d. h. zu einer Lockerung), bis beim Erreichen der Lockerungsgeschwindigkeit ein Zustand erreicht wird, bei welchem die Partikel der Schüttung ohne permanenten Kontakt untereinander im Prozessgas suspendiert sind. Einzelheiten der Bestimmung und Berechnung des Lockerungspunktes bzw. der Lockerungsgeschwindigkeit können den VDI-Wärmeatlas, 5. Aufl. 1988, Kapitel Lf (hinsichtlich der Bestimmung über die Messung des Druckverlustverlaufs insbesondere Bild 4), entnommen werden.

Für ein aus Granulat aufgebautes Schüttgut mit einem mittleren Teilchendurchmesser von 1,4 bis 5 mm und einer Temperatur zwischen 0 °C und 300 °C wird der Lockerungspunkt bei einer Gasgeschwindigkeit (d. h. der Lockerungsgeschwindigkeit) von ca. 0,6 bis 2 m/s erreicht.

Um das erfindungsgemässe Verhältnis $v = v_g/v_l$ von 0,7 bis 1,5 zumindest im unteren Bereich des ersten Reaktionsraumes zu erreichen, muss das Prozessgas beispielsweise bei einer Lockerungsgeschwindigkeit von 0,6 m/s somit eine Leerrohrgeschwindigkeit von 0,42 bis 0,9 m/s sowie bei einer Lockerungsgeschwindigkeit von 2 m/s somit eine Leerrohrgeschwindigkeit von 1,4 bis 3 m/s aufweisen. Vorzugsweise liegt die Leerrohrgeschwindigkeit Vg beim erfindungsgemässen Verfahren im Bereich von 0.85 bis 1,3.

Erfindungsgemäss kann jedes Polyamid eingesetzt werden, dessen Molekulargewicht sich in einer SSP-Reaktion erhöhen lässt. Vorzugsweise wird ein Polyamid-Prepolymer eingesetzt. Es kann sich aber auch um ein Polyamid-Polymer mit (gegenüber einem Polyamid-Prepolymer) bereits erhöhtem Molekulargewicht handeln, beispielsweise um ein Rezyklat, d. h. ein wieder aufbereitetes Polymer aus einem Herstellungs- oder Verarbeitungsprozess oder um ein nach dem Konsumentengebrauch gesammeltes und wieder aufbereitetes Polymer.

Erfindungsgemäss können alle Arten von Polyamiden eingesetzt werden wie aliphatische Polyamide, teilaromatische Polyamide oder aromatische Polyamide sowie Copolymere davon. Aliphatische Polyamide können aus aliphatischen oder cycloaliphatischen Diaminen durch Reaktion mit aliphatischen oder cycloaliphatischen Dicarbonsäuren beziehungsweise aus aliphatischen α,ω-Aminocarbonsäuren oder Lactamen oder Gemischen derselben hergestellt werden. Geeignete (cyclo)aliphatische Diamine sind beispielsweise lineare, verzweigte oder cyclische C2-C15-Diamine wie 1,4-Butandiamin, 1,6-Hexamethylendiamin, 2-Methyl-1,5-pentamethylen-diamin, 1,9-Nonandiamin, 1,11-Undecandiamin, 1,12-Dodecandiamin, 1,3-Diaminomethylcyclohexan, 1,4-Diaminomethylcyclohexan oder 1,4-Diaminocyclohexan.

Geeignete (cyclo)aliphatische Dicarbonsäuren sind beispielsweise lineare, verzweigte oder cyclische C4-C15-Dicarbonsäuren wie Adipinsäure, Dodecansäure, oder p-Cyclohexandicarbonsäure.

Geeignete aliphatische α,ω-Aminocarbonsäuren sind beispielsweise C4-12-α,ω-Aminocarbonsäuren wie Aminocaprinsäure oder Aminoundecansäure.

Geeignete Lactame sind beispielsweise Caprolactam, Caprylolactam oder Dodecalactam.

Teilaromatische Polyamide können aus einer der vorstehend beschriebenen aliphatischen Komponenten und einem aromatischen Monomer wie einem aromatischen Amin wie p-Phenylendiamin oder einer aromatischen Dicarbonsäure wie Orthophthalsäure, Isophthalsäure oder Terephthalsäure hergestellt werden.

Aromatische Polyamide können aus einer Kombination der vorstehenden aromatischen Diamine und aromatischen Dicarbonsäuren hergestellt werden.

Erfindungsgemäss geeignete Polyamide sind beispielsweise Polyamid-4,6, Polyamid-6,6, Polyamid-6, Polyamid-11 oder Polyamid-12, um nur einige wenige zu nennen.

Erfindungsgemäss bevorzugt wird in dem beanspruchten Verfahren ein Polyamid-Prepolymer eingesetzt. Unter einem Polyamid-Prepolymer wird das Produkt einer Polykondensation der vorstehend beschriebenen Monomere verstanden, welches eine relative Lösungsviskosität (Schwefelsäureviskosität oder SAV) im Bereich von 1,7 bis 4, vorzugsweise von 1,7 bis 3, besonders bevorzugt von 1,7 bis 2,5 aufweist. Die Bestimmung der SAV in 96% Schwefelsäure mit Hilfe eines Ubbelohde-Viskosimeters (Kapillare II) bei 25 °C ist dem Fachmann bekannt und beispielsweise in der DE 195 10 698 (S. 4, Z. 50-56), auf deren entsprechenden Inhalt hier ausdrücklich Bezug genommen wird, oder in der DIN-Norm Nr. 53 727 beschrieben. Die SAV ist der Quotient aus der Viskosität der Polyamid-Lösung und der Viskosität des Lösungsmittels und ist ein Mass für das mittlere Molekulargewicht des Polyamids.

Polyamid-Prepolymere können auf gängige, dem Fachmann bekannte Weise hergestellt werden, üblicherweise über eine Schmelzpolykondensation oder alternativ über eine Lösungspolykondensation. Diese Polykondensationsreaktionen sind dem Fachmann bekannt und in der Literatur beschrieben (z. B. EP 0 254 367; Bottenbruch/ Binsack (Hrsg.), Technische Thermoplaste, 4. Polyamide, München 1998).

Den Polymeren können Additive zugegeben werden. Als Additive eignen sich zum Beispiel Katalysatoren, Farbstoffe und Pigmente, UV-Blocker, Verarbeitungshilfsmittel, Stabilisatoren, Schlagzähigkeitsmodifikatoren, Treibmittel chemischer und physikalischer Art, Füllstoffe, Nukleierungsmittel, Flammhemmungsmittel, Weichmacher, Barriere- oder mechanische Eigenschaften verbessernde Partikel, verstärkende Körper wie Kugeln oder Fasern, sowie reaktive Substanzen wie zum Beispiel Sauerstoffabsorber, Acetaldehydabsorber oder molekulargewichtserhöhende Substanzen usw.

Das Polyamid wird dem erfindungsgemässen Verfahren in Partikelform zugeführt, d. h. als Granulat. Die Herstellung von Granulaten erfolgt erfindungsgemäss bevorzugt aus einer Polymerschmelze. Das Herstellen einer Polymerschmelze erfolgt mittels im Stand der Technik bekannter Apparaten oder Reaktoren. Grundsätzlich kommen Polymerisationsreaktoren in Frage, in denen Polymere in flüssiger Phase hergestellt werden, wie zum Beispiel Rührkessel, Käfigreaktoren oder Scheibenreaktoren, oder aber Apparaturen, in denen zuvor hergestellte Polymere aufgeschmolzen werden, wie zum Beispiel Extruder oder Kneter. Die Polymerschmelzeherstellung kann kontinuierlich oder batchweise erfolgen. Für die weitere Verarbeitung sind aber kontinuierliche Prozesse bevorzugt.

In einer Austrittsvorrichtung, insbesondere einer Düse oder Düsenplatte, werden aus der Polykondensatschmelze einzelne Polykondensatstränge geformt. Zur Herstellung von Granulaten aus den Polykondensatsträngen können die im Stand der Technik bekannten Granulationstechniken wie Stranggranulation, Wasserringgranulation, Unterwassergranulation oder Kopfgranulation (auch hot face - Granulation) verwendet werden. Dabei werden die Polykondensatstränge, die aus den Schmelzekanälen austreten, verfestigt und in eine Vielzahl von einzelnen Granulaten aufgetrennt, wobei das Auftrennen vor oder nach dem Verfestigen erfolgen kann.

Trotz der Verwendung des Begriffs "Wasser" in der Bezeichnung der Granulationseinrichtungen können auch andere flüssige Medien verwendet werden. Das Auftrennen erfolgt zum Beispiel durch eine selbstständige Tropfenbildung, durch den Einsatz eines flüssigen Schermediums oder durch ein mechanisches Trennen, insbesondere Schneiden.

Während eine selbstständige oder eine durch ein Schermedium erzwungene Tropfenbildung am Düsenaustritt erfolgt, kann ein Schneiden sowohl direkt am Düsenaustritt erfolgen oder aber erst nach dem Durchlaufen einer Behandlungsstrecke. Das Verfestigen der Polykondensatschmelze erfolgt durch Kühlen mit Hilfe eines oder mehrerer Kühlfluide, wobei es sich um gasförmige (z. B. Luft, Stickstoff oder $CO_2$) oder flüssige (z. B. Wasser oder Ethylenglykol) Kühlmedien oder eine Kombination daraus handeln kann. Erfindungsgemäss wird zumindest ein flüssiges Kühlmedium verwendet. Das Polykondensat, insbesondere als Polykondensatstränge oder als Tropfen, kann zum Beispiel vor dem Eintritt in das flüssige Kühlmedium eine Strecke durchfliessen, die ein Prozessgas, insbesondere Luft oder Wassernebel, enthält.

Die mittlere Granulatgrösse soll zwischen 0.1 mm und 10 mm, vorzugsweise zwischen 0.5 mm und 6 mm und insbesondere zwischen 1,4 mm und 5 mm liegen.

Die Granulate sollen vorzugsweise eine definierte Granulatform wie zum Beispiel zylinderförmig, kugelförmig, tropfenförmig, kugelähnlich oder eine Design-Form aufweisen, wie sie zum Beispiel in EP 0 541 674 vorgeschlagen ist.

Die Polykondensatgranulate werden vor der Einführung in das erfindungsgemässe Verfahren auf eine Temperatur gebracht, die im Bereich von 10 °C bis 110 °C liegt. Vorzugsweise werden die Granulate entweder auf Raumtemperatur oder auf eine Temperatur von 80-110 °C gebracht. Gleichzeitig mit der Temperatureinstellung können die Polykondensatgranulate zu einem weiteren Prozessschritt gefördert werden. Im Gegensatz zu den Verfahren aus dem Stand der Technik ist es erfindungsgemäss möglich, auch Polyamidgranulate bei Raumtemperatur effizient zu konditionieren. Aber auch bei der Konditionierung von Polyamidgranulat mit höherer Temperatur ergeben sich die erfindungsgemässen Vorteile bei einer anschliessenden Nachkondensation.

Nach einem Abkühlen wird das Kühlmedium von den Granulaten getrennt. Optional erfolgt eine weitere Behandlung (Konditionierung) der Granulate in einem flüssigen Medium, wofür direkt das Kühlmedium oder eine andere Flüssigkeit verwendet werden kann. Insbesondere wird eine derartige weitere Behandlung des Granulats durchgeführt, um niedermolekulare Monomere und Oligomere zu entfernen, welche in der Schmelzpolymerisationsstufe zwangsläufig entstehen und die Verarbeitbarkeit sowie die Eigenschaften des Granulats beeinträchtigen. Die Entfernung der Monomere und Oligomere erfolgt durch kontinuierliches oder diskontinuierliches Extrahieren mit heissem Wasser (DE A 25 01 348, DE A 27 32 328), durch Abdestillieren im Vakuum (US 4,376,680) oder im überhitzten Wasserdampfstrom (EP 0 284 968 B1). All diese Verfahren werden aus Gründen des Umweltschutzes und der Wirtschaftlichkeit vorzugsweise unter Rückgewinnung und Wiederverwendung des Extrakts durchgeführt. Anstelle von Wasser als Extraktionsflüssigkeit wurde auch der Einsatz von Caprolactam (DE A 43 24 616) oder von wässrigen Aminonitril-Lösungen (WO 99/43407) vorgeschlagen. Die Extraktion erfolgt in einer oder mehreren Stufen in einem Extraktionsturm über mehrere Stunden. Derartige Extraktionstürme und -verfahren sind aus dem Stand der Technik hinlänglich bekannt. Beispielhaft sei auf die WO 99/43407 verwiesen, auf deren diesbezüglichen Inhalt hier Bezug genommen wird. Das Trennen der Granulate von einem flüssigen Kühlmedium erfolgt mittels im Stand der Technik bekannter Trennvorrichtungen. Dabei kann es sich lediglich um passive Trennvorrichtungen wie zum Beispiel Gitter oder Roste handeln, durch die das Kühlmedium, nicht aber das Granulat durchtreten kann. Üblicherweise werden aber aktive Trennvorrichtungen zumindest für einen Teil der Trennung verwendet, wobei die Trennung zum Beispiel aufgrund einer Gasdurchströmung, einer Zentrifugalkraft oder eines Aufpralls erfolgt. Solche Vorrichtungen sind zum Beispiel als Absaugvorrichtungen, Pralltrockner oder Zentrifugaltrockner bekannt. Ebenso kann ein Teil der Trennung mittels eines ungesättigten, optional erwärmten Gasstroms durch Verdampfen des Kühlmediums erfolgen.

Nach dem Abtrennen der Polykondensatgranulate vom flüssigen Kühlmedium kann ein direkter Übertrag in den nachfolgenden ersten Reaktionsraum erfolgen. Optional können die Polykondensatgranulate aber auch durch eine Förderstrecke geleitet werden.

Vor dem Eintritt in den ersten Reaktionsraum (Konditionierer) haben die Partikel

- einen Wassergehalt von 5 bis 20 Gew.-%, vorzugsweise von 9 bis 16 Gew.-% bezogen auf das Trockengewicht der Partikel;
- einen Monomergehalt von bis zu 15 Gew.-%, vorzugsweise bis zu 5 Gew.-% und besonders bevorzugt von 0,3 bis 3 Gew.-% bezogen auf das Trockengewicht der Partikel;
- eine relative Lösungsviskosität (Schwefelsäureviskosität oder SAV) im Bereich von 1,7 bis 4, vorzugsweise von 1,7 bis 3, besonders bevorzugt von 1,7 bis 2,5.

Der erste Reaktionsraum (Konditionierer) der erfindungsgemässen Vorrichtung ist von einem Gehäuse umgeben. Der horizontale Querschnitt des ersten Reaktionsraums kann eine beliebige Form aufweisen. Eine runde oder rechteckige Form ist erfindungsgemäss bevorzugt. Der erste Reaktionsraum ist im Wesentlichen vertikal angeordnet, so dass die Partikel den Raum unter Einfluss der Schwerkraft von oben nach unten durchfliessen. Wichtig ist das Erreichen eines gleichmässigen Produktflusses.

Der erste Reaktionsraum (Konditionierer) der erfindungsgemässen Vorrichtung wird seitlich von einem Mantel begrenzt. Die Wand dieses Mantels kann dabei aus konischen oder zylindrischen Segmenten oder einer Kombination derselben bestehen. Die Geschwindigkeitsverteilung des die Partikel im Gegenstrom durchströmenden Prozessgases lässt sich über die Höhe des ersten Reaktionsraums beeinflussen. Eine Aufweitung im Deckenbereich erlaubt dabei eine Reduktion der Gasgeschwindigkeit, was den Austrag an dem als Schüttgut vorliegenden Polyamidmaterial verringert oder verhindert. Eine Verengung im Deckenbereich erlaubt andererseits eine Erhöhung der Gasgeschwindigkeit, was zu einer stärkeren Verwirbelung des Materials und somit zu einer Verringerung oder Verhinderung des Verklebens der Partikel führt.

Im Innern des ersten Reaktionsraums kann mindestens ein Verdrängungskörper angeordnet sein, der nicht vom Schüttgutmaterial durchflossen wird und somit den ersten Reaktionsraum verkleinert. Derartige Verdrängungskörper können beispielsweise zum Durchleiten des Prozessgases, zur Anpassung der freien Querschnittsfläche oder zur Verbesserung des Flusses des Schüttgutmaterials eingesetzt werden. Weiterhin kann der erste Reaktionsraum durch den Einsatz von Trennwänden in mehrere Kammern unterteilt werden, wobei eine Produktverteilung auf mehrere Kammern gleichzeitig oder von einer Kammer zur nächsten denkbar ist. Zumindest eine Kammer dieser Ausführungsform bildet hierbei den erfindungsgemässen ersten Reaktionsraum mit den hier beschriebenen Eigenschaften. Die Trennung in Kammern kann sich über die gesamte Höhe des ersten Reaktionsraumes, über die von Schüttgutmaterial bedeckte Höhe oder nur über einen Teil der von Schüttgutmaterial bedeckten Höhe des ersten Reaktionsraums erstrecken. Die vorstehend beschriebenen Kammern können einzeln oder zusammen mit Peripherieanordnungen wie der Wegführeinrichtung für das Prozessgas, der Austragsvorrichtung, Erhitzern, Ventilatoren usw. gespeist oder betrieben werden.

Der erste Reaktionsraum umfasst zumindest eine Einfüllöffnung zur Einführung des zu behandelnden Polyamidmaterials, welche sich vorzugsweise im Deckenbereich des ersten Reaktionsraumes befindet. Hierbei kann es sich beispielsweise um eine Gehäuseöffnung oder um einen Austritt eines in den ersten Reaktionsraum geführten Rohres handeln. Zur Verteilung des einzuführenden Materials kann die Einfüllöffnung segmentiert werden oder es können mehrere Einfüllöffnungen vorhanden sein, welche vorzugsweise über ein Verteilstück einen gleichmässigen Materialanteil erhalten.

Der erste Reaktionsraum ist nach unten durch einen Boden begrenzt, welcher flach oder konisch auslaufend geformt sein kann. Der erste Reaktionsraum weist mindestens eine Austragsöffnung auf, die üblicherweise im Bodenbereich des Reaktionsraumes angeordnet und beispielsweise eine Gehäuseöffnung oder ein Rohreintritt ist. Erfindungsgemäss bevorzugt wird das konditionierte Material der Austragsöffnung durch einen konisch zulaufenden Bereich zugeführt, wobei der Winkel des so gebildeten Auslaufkonus vorzugsweise 30 bis 50° beträgt. Es können auch mechanische Austragsvorrichtungen wie beispielsweise eine Schnecke bereitgestellt sein.

Im Bodenbereich des ersten Reaktionsraumes befindet sich zumindest eine Zuführeinrichtung für das Prozessgas, welche Austrittsöffnungen aufweist, durch die das Prozessgas von unten in den ersten Reaktionsraum strömt. Es kann sich hierbei um Zuführleitungen handeln. Eine ausreichend gleichmässige Verteilung des Prozessgases ist zu gewährleisten. Bevorzugt ist eine Vielzahl an Leitungen mit Austrittsöffnungen, über die das Prozessgas über den Querschnitt des ersten Reaktionsraumes verteilt wird. Die Zuführeinrichtung ist üblicherweise direkt oder indirekt mit Leitungen und Kanälen verbunden, durch welche eine Verbindung zu Einrichtungen zur Vorbehandlung des Prozessgases, wie Verdichtungseinrichtungen (Ventilatoren, Gebläse usw.), Wärmetauschern oder Reinigungseinrichtungen (wie Filter, Gaswäscher usw.) hergestellt wird. Gemäss einer alternativen Ausführungsform der vorliegenden Erfindung kann mindestens ein zusätzlicher Gaseintritt etwas auf halber Höhe des ersten Reaktionsraums vorgesehen sein.

Das Reaktionsgas strömt im Gegenstrom zum Schüttgutmaterial von unten nach oben durch den ersten Reaktionsraum und verlässt diesen durch Austrittsöffnungen, die im Deckenbereich des ersten Reaktionsraums angeordnet sind. Bei den Austrittsöffnungen kann es sich um Wegführleitungen handeln. Es können sich in den Wegführleitungen Vorrichtungen befinden, die den Durchtritt von Prozessgas erlauben, aber den Durchschritt von Schüttgut behindern oder verhindern, zum Beispiel Zick-Zack-Abscheider. Die Austrittsöffnung ist üblicherweise ebenfalls direkt oder indirekt mit Leitungen und Kanälen verbunden, durch welche eine Verbindung zu Einrichtungen zur Vorbehandlung des Prozessgases wie Verdichtungseinrichtungen (Ventilatoren, Gebläse usw.), Wärmetauschern oder Reinigungseinrichtungen (wie Filter, Gaswäscher usw.) hergestellt wird. Vorzugsweise besteht zwischen der Zuführ- und Wegführeinrichtung des Prozessgases ein geschlossener Kreislauf. Dieser Kreislauf dient vor allem zur Reinigung des Prozessgases und dessen erneutes Temperieren auf die nachstehend beschriebene Eingangstemperatur.

Erfindungsgemäss bevorzugt weist der erste Reaktionsraum eine flache Struktur auf, wobei die Höhe (H) des ersten Reaktionsraums und die Querschnittsfläche (A) im Bodenbereich (bei konischem Auslauf die noch nicht verengte Querschnittsfläche) ein Verhältnis $V = H^2/A$ bilden, wobei V kleiner als 4, bevorzugt kleiner als 2 ist.

Das Prozessgas ist erfindungsgemäss bevorzugt Stickstoff, welcher bei Eintritt in den ersten Reaktionsraum einen Feuchtigkeitsgehalt von 0,8 bis 20 Gew.-% Wasser (entspricht einem Taupunkt von 10 bis 70 °C), vorzugsweise 0,8 bis 13 Gew.-% Wasser (entspricht einem Taupunkt von 10 bis 60 °C), und bevorzugt 1,4 bis 7,8 Gew.-% Wasser (entspricht einem Taupunkt von 20 bis 50 °C) aufweist. Das Prozessgas besitzt bei Eintritt in den ersten Reaktionsraum vorzugsweise eine Temperatur von 100 bis 200 °C. Erfindungsgemäss wird eine derartige Menge an Prozessgas in den ersten Reaktionsraum eingeleitet, dass das Verhältnis von Prozessgasmenge (mg) zur Menge an Schüttgutmaterial im ersten Reaktionsraum (mp) mg/mp im Bereich von 3,0 bis 20,0, vorzugsweise von 3,8 bis 15,0 und besonders bevorzugt von 4,0 bis 10,0 liegt. Vorzugsweise weit das Prozessgas einen Sauerstoffgehalt von höchstens 20 ppm auf.

Es ist erfindungsgemäss wesentlich, dass das Prozessgas mit einer ausreichenden Geschwindigkeit in den ersten Reaktionsraum eintritt. Erfindungsgemäss ist es wesentlich, dass zumindest im unteren Bereich des ersten Reaktionsraumes das Verhältnis der Leerrohrgeschwindigkeit des Prozessgases zur Lockerungsgeschwindigkeit der Polyamidpartikel im Bereich von 0,7 bis 1.5 liegt und die Polyamidpartikel zumindest im unteren Bereich des ersten Reaktionsraumes als gelockertes Bett vorliegen. Dies wurde vorstehend bereits ausführlich dargetan.

Die erfindungsgemäss einzustellenden Werte (Temperatur des Granulats, Feuchtigkeitsgehalt des Prozessgases, mg/mp-Verhältnis, vg/vl-Verhältnis) sind voneinander abhängig. Wird beispielsweise ein Polyamidgranulat mit einer niedrigen Temperatur (beispielsweise Raumtemperatur) in Kombination mit einem Prozessgas mit höherem Feuchtigkeitsgehalt verwendet, müssen entsprechend eine höhere Menge an Prozessgas eingesetzt sowie dessen Leerrohrgeschwindigkeit erhöht werden, um eine Auskondensation des Prozessgases im oberen Bereich des ersten Reaktionsraums zu vermeiden. Dies ist in den nachstehenden Beispielen und Vergleichsbeispielen 1 bis 3 gezeigt. Der Fachmann kann anhand seines Routinekönnens die jeweils einzustellenden Parameter innerhalb der erfindungsgemässen Bereiche ohne weiteres bestimmen.

Gemäss einer bevorzugten Ausführungsform der vorliegenden Erfindung wird zudem im oberen Bereich des ersten Reaktionsraums ein Verhältnis der Leerrohrgeschwindigkeit des Prozessgases zur Lockerungsgeschwindigkeit der Polyamidpartikel im Bereich von 1,2 bis 4, vorzugsweise 1,5 bis 3 eingestellt, so dass die Polyamidpartikel zumindest im oberen Bereich des ersten Reaktionsraumes fluidisiert werden. Dies kann durch die Bereitstellung von an sich bekannten Stauelementen im oberen Bereich des ersten Reaktionsraums erreicht werden. Unter dem oberen Bereich des ersten Reaktionsraums soll hier der Bereich des ersten Reaktionsraums verstanden werden, welcher sich bei einer gedanklichen Aufteilung des ersten Reaktionsraums in zwei gleich grosse Abschnitte im oberen dieser beiden Abschnitte befindet. Unter dem unteren Bereich des ersten Reaktionsraums soll analog hier der Bereich des ersten Reaktionsraums verstanden werden, welcher sich bei einer gedanklichen Aufteilung des ersten Reaktionsraums in zwei gleich grosse Abschnitte im unteren dieser beiden Abschnitte befindet.

Durch diese hohe Gasgeschwindigkeit in Verbindung mit den anderen hier diskutierten Parametern im ersten Reaktionsraum (Feuchtigkeitsgehalt des Prozessgases, Temperatur des Granulats, mg/mp-Verhältnis) wird gewährleistet, dass das Prozessgas beim Austritt aus dem ersten Reaktionsraum noch eine Temperatur oberhalb seines Taupunktes aufweist. Erfindungsgemäss bevorzugt weist das Prozessgas beim Verlassen aus dem ersten Reaktionsraum eine Temperatur von mindestens 10 °C über dem Taupunkt des Gases auf.

Erfindungsgemäss werden 100 bis 12000 kg Schüttgut pro Stunde durch den ersten Reaktionsraum geleitet. Das Schüttgut hat im ersten Reaktionsraum vorzugsweise eine Verweilzeit von 0,2 bis 5 h, besonders bevorzugt 0,5 bis 3 h. Beim Austritt aus dem ersten Reaktionsraum hat das Schüttgut eine Temperatur im Bereich von 100 bis 195 °C, vorzugsweise 120 bis 190 °C, sowie einen Wassergehalt von maximal 1 Gew.-%, bezogen auf das Trockengewicht des Schüttguts. Das Material weist an dieser Stelle einen Monomergehalt von bis zu 5 Gew.-% auf, bezogen auf das Trockengewicht des Schüttguts. Die relative Lösungsviskosität (SAV) des Schüttguts beim Verlassen des ersten Reaktionsraum liegt im Bereich von 2 bis 6, vorzugsweise von 2,3 bis 4.

Mit dem erfindungsgemässen Verfahren ist es möglich, sowohl heisses Polyamid mit einer Temperatur von 60 bis ca. 110 °C bei Eintritt in den ersten Reaktionsraum als auch kaltes Polyamid mit einer Temperatur von 0 bis ca. 60 °C, bevorzugt 15 bis 40 °C, bei Eintritt in den ersten Reaktionsraum zu konditionieren, ohne dass es zu einer nachteiligen Kondensation von Wasser aus dem Prozessgas kommt. Eine Kondensatabscheidung aus dem Prozessgas hätte Druckspitzen sowie Verzerrungen des Verweilzeitspektrums zur Folge, da der Produkt- und Gasfluss negativ beeinflusst würden und ein hoher Gasdruckverlust entstünde. Das erfindungsgemässe Verfahren zeichnet sich dadurch aus, dass eine vergleichsweise grosse Menge an Prozessgas durch den ersten Reaktionsraum geführt werden kann, ohne dass hierbei ein nennenswerter Druckverlust auftritt. Vorzugsweise tritt beim erfindungsgemässen Verfahren ein Druckverlust von weniger als 150 mbar, vorzugsweise weniger als 100 mbar auf.

Das vorstehend beschriebene Verfahren zur Behandlung von Polyamid kann für sich allein durchgeführt werden. Erfindungsgemäss bevorzugt schliesst sich aber ein Schritt zur Erhöhung des Molekulargewichts des Polyamids (SSP-Reaktion) an.

Obwohl es grundsätzlich möglich wäre, beide Schritte in unterschiedlichen, voneinander getrennten Abschnitten der gleichen Vorrichtung durchzuführen (d. h. beide Reaktionsräume befinden sich in einer einzigen Vorrichtung), ist es erfindungsgemäss bevorzugt, die zweite Verfahrensstufe in einer separaten Vorrichtung durchzuführen. Das Polyamid kann hierbei ohne Förderung (d. h. ausschliesslich mit Hilfe der Schwerkraft) durch ein Fallrohr in den zweiten Reaktionsraum überführt werden. Gemäss einer alternativen Ausführungsform kann das Polyamid nach Verlassen des ersten Reaktionsraumes mittels geeigneter Fördereinrichtungen auf mechanischem Weg (z. B. mit Hilfe eines Förderbandes) in den zweiten Reaktionsraumes überführt werden. Gemäss einer weiteren erfindungsgemässen Variante kann die Förderung auch mit Hilfe eines Fördergases erfolgen. Diese Varianten sind dem Fachmann aus dem Gebiet der SSP-Reaktion bekannt (z. B. Förderung aus einem Kristallisator in einen SSP-Reaktor) und müssen hier nicht näher erläutert werden.

Vor dem Eintritt in den zweiten Reaktionsraum kann das Polyamidmaterial in zusätzlichen Einrichtungen bei Bedarf aufgeheizt und/oder entstaubt werden. Aufheiz- und Entstaubungsanlagen sind dem Fachmann hinlänglich bekannt (z. B. WO 2010/094807) und müssen hier nicht näher erläutert werden.

Bei Eintritt in den zweiten Reaktionsraum weist das Polyamidmaterial eine Temperatur im Bereich von 100 bis 195°C, vorzugsweise 120 bis 190 °C, sowie einen Wassergehalt von maximal 1 Gew.-%, bezogen auf das Trockengewicht des Schüttguts. Das Material weist an dieser Stelle einen Monomergehalt von bis zu 5 Gew.-% auf, bezogen auf das Trockengewicht des Schüttguts. Die relative Lösungsviskosität (SAV) des Schüttguts beim Verlassen des ersten Reaktionsraum liegt im Bereich von 2 bis 6, vorzugsweise von 2,3 bis 4.

Der zweite Reaktionsraum befindet sich in einer Vorrichtung, wie sie herkömmlich zur Durchführung einer SSP-Reaktion (für Polyester oder Polyamide) eingesetzt wird. Derartige Vorrichtungen sind bekannt (z. B. DE 10 2005 025 972 A1) und müssen hier nicht näher beschrieben werden.

Das Polyamidmaterial durchläuft den zweiten Reaktionsraum vertikal von oben nach unten. Erfindungsgemäss werden 100 bis 12000 kg Schüttgut pro Stunde durch den zweiten Reaktionsraum geleitet. Innerhalb des zweiten Reaktionsraums liegt das Polyamidmaterial als Festbett vor und hat eine Verweilzeit von 2 bis 30 h, vorzugsweise 4 bis 20 h, abhängig von den Reaktionsbedingungen im zweiten Reaktionsraum und dem angestrebten Molekulargewicht. Erfindungsgemäss bevorzugt ist die Durchführung der SSP-Reaktion, bis das Molekulargewicht des Polyamids auf eine relative Lösungsviskosität (SAV) von 2 bis 6, vorzugsweise 2,3 bis 4,0, angestiegen ist, wobei aber mindestens eine Zunahme der SAV um einen Wert von grösser als 0.2 insbesondere grösser als 0.5 erreicht wurde.

Im zweiten Reaktionsraum wird das Polyamid auf bekannte Weise durch Prozessgas im Gegenstrom behandelt. Gemäss der vorliegenden Erfindung hat das Prozessgas bei Eintritt in den Bodenbereich des zweiten Reaktionsraums eine Temperatur von 10 bis 200 °C, vorzugsweise 20 bis 195 °C. Erfindungsgemäss bevorzugt wird Stickstoff als Prozessgas mit einem Feuchtigkeitsgehalt von höchstens 10 Gew.-% Wasser, bezogen auf das Gesamtgewicht des Prozessgases, eingesetzt. Somit weist das Prozessgas bei Eintritt in den zweiten Reaktionsraum einen Taupunkt von -60 bis +50 °C auf. Vorzugsweise wird eine derartige Menge an Prozessgas in den zweiten Reaktionsraum geleitet, dass das Verhältnis von Prozessgasmenge (mg) zur Menge an Schüttgutmaterial (mp) mg/mp im zweiten Reaktionsraum im Bereich von 0,05 bis 4,0, bevorzugt unter 1,5, besonders bevorzugt unter 1 liegt.

Der zweite Reaktionsraum kann gemäss einer alternativen erfindungsgemässen Ausführungsform mit Hilfe einer an sich bekannten Heizvorrichtung auf eine bestimmte Temperatur erhitzt werden, um den Nachkondensationsprozess zu unterstützen.

Das Prozessgas durchströmt den zweiten Reaktionsraum vorzugsweise mit einer Geschwindigkeit von 0,05 bis 0,7 m/s.

Das Prozessgas verlässt den zweiten Reaktionsraum in dessen Deckenbereich. Es weist an dieser Stelle eine Temperatur von 10 bis 200 °C, vorzugsweise 50 bis 195°C auf. Der Wassergehalt des Prozessgases beträgt an dieser Stelle 0,8 bis 20 Gew.-%, bezogen auf das Gesamtgewicht des Prozessgases, entsprechend einem Taupunkt von 10 bis 70 °C auf. Dieses Prozessgas wird auf bekannte Weise gereinigt, getrocknet und regeneriert (temperiert) und kann ebenfalls auf bekannte Weise als Prozessgas im ersten Reaktionsraum verwendet werden.

Es hat sich überraschend gezeigt, dass ein erfindungsgemäss konditioniertes Polyamid-Granulat auf vorteilhafte Weise einer Nachkondensation unterzogen werden kann. Insbesondere weist das erfindungsgemäss konditionierte Polyamidgranulat einen derart niedrigen Feuchtigkeitsgehalt (maximal 1 Gew.-% bezogen auf das Trockengewicht des Schüttguts) auf, dass es beim Eintritt in den zweiten Reaktionsraum, in welchem die Nachkondensation stattfindet, nicht zu einer verdampfungsbedingten Abkühlung des Granulats kommt. Das erfindungsgemäss konditionierte Granulat behält vielmehr im Wesentlichen seine Temperatur aus der Konditionierungsstufe bei und kann schneller auf die Nachkondensationstemperatur erhitzt werden. Insgesamt ergibt sich für ein erfindungsgemäss konditioniertes Granulat eine deutlich verringerte Verweilzeit im zweiten Reaktionsraum, bis der gewünschte Endpunkt (SAV-Wert beziehungsweise Wassergehalt des Polyamids) erreicht ist. Dies ist nachstehend in den Beispielen und Vergleichsbeispielen 6 bis 10 gezeigt.

Insbesondere ist es erfindungsgemäss aufgrund der vorteilhaften Konditionierung des Polyamidgranulats auch nicht erforderlich, das Prozessgas an mehreren Stellen in den zweiten Reaktionsraum zu leiten. Dadurch ergibt sich apparate- und prozesstechnisch eine erhebliche Erleichterung gegenüber der Lehre der EP 2 297 228 B1.

Bei Austritt aus dem zweiten Reaktionsraum weist das Produkt üblicherweise eine Temperatur im Bereich von 60 bis 195°C, vorzugsweise 100 bis 190 °C, einen Wassergehalt von maximal 0,5 Gew.-%, vorzugsweise 0,01 bis 0,2 Gew.-%, insbesondere weniger als 0,1 Gew.-%, bezogen auf das Trockengewicht des Materials, sowie einen Monomergehalt von maximal 1,5 Gew.-%, vorzugsweise 0,1 bis 1,3 Gew.-%, bezogen auf das Trockengewicht des Materials, auf. Das Material kann bei Bedarf auf bekannte Weise behandelt werden, beispielsweise in einer Kühleinrichtung auf 20 bis 120 °C, vorzugsweise 30 bis 60 °C abgekühlt werden, oder wahlweise auch direkt zu einem gewünschten Produkt weiterverarbeitet werden.

Die vorliegende Erfindung wird nachstehend anhand von nicht einschränkenden Beispielen und Figuren näher erläutert. Es zeigt:

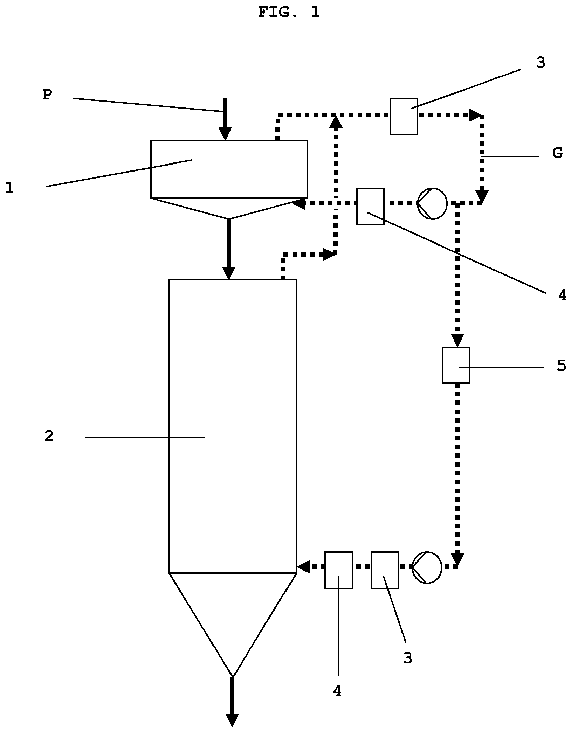

Fig. 1     eine schematische Darstellung einer erfindungsgemäss verwendbaren Vorrichtung zur Konditionierung von Polyamid.

In Fig. 1 ist eine erfindungsgemäss verwendbare Vorrichtung zur Konditionierung von Polyamid gezeigt. Polyamidgranulat (P) strömt wie in Fig. 1 mit den durchgezogenen Pfeilen angezeigt durch einen Gegenstromapparat (1), welcher dem erfindungsgemässen ersten Reaktionsraum entspricht und in welchem eine thermische Behandlung (Trocknung) des Polyamids erfolgt. Hierfür wird das Polyamid (P) im Gegenstromapparat (1) mit einem Prozessgas (G) behandelt, welches entgegengesetzt zur Strömungsrichtung des Polyamids (P) durch den Gegenstromapparat (1) geleitet wird. Die Strömungsrichtung des Prozessgases (G) ist in Fig. 1 durch gestrichelte Linien angedeutet. Das Prozessgas (G) tritt am unteren Ende des Gegenstromapparats (1) ein und verlässt den Gegenstromapparat (1) an dessen oberen Ende. Anschliessend wird das Prozessgas (G) wie in Fig. 1 gezeigt vorzugsweise rezykliert, indem es durch einen Staubabscheider (3) (beispielsweise einem Filter oder Zyklonabscheider) geleitet wird. Vor den Eintritt in den Gegenstromapparat (1) wird das Prozessgas (G) mit Hilfe eine Temperiereinheit (4), beispielsweise ein Dampferhitzer, HTM-Erhitzer oder eine elektrische Heizvorrichtung, auf die gewünschte Temperatur gebracht, bevor das Prozessgas (G) wieder in den Gegenstromapparat (1) geleitet wird.

Gegenstromapparate sind hinlänglich bekannt und müssen an dieser Stelle nicht näher erläutert werden. Gemäss der vorliegenden Erfindung kann anstelle eines Gegenstromapparats auch eine andere Trocknungsvorrichtung eingesetzt werden, beispielsweise eine Fliessbettapparatur, welche vom Polyamidgranulat horizontal durchströmt wird. Das Prozessgas wird in der Fliessbettapparatur typischerweise im Kreuzstrom zum Polyamid durch den Boden der Fliessbettapparatur geleitet.

Das Polyamid (P) wird nach Verlassen der Trocknungseinheit, vorzugsweise des Gegenstromapparats (1), in einen Schachttrockner (2) geleitet. Im Schachttrockner (2) findet eine weitere thermische Behandlung unter Erhöhung des Molekulargewichts des Polyamids statt. Das Polyamid (P) durchströmt den Schachttrockner (2) von oben nach unten. Durch den Schachttrockner (2) wird im Gegenstrom Prozessgas (G) geleitet. Das Prozessgas tritt bei der erfindungsgemässen Vorrichtung nur durch ein am unteren Ende des Schachttrockners (2) angeordnetes Einleitungsrohr in den Schachttrockner (2) ein und verlässt diesen an dessen oberen Ende. Anschliessend wird das Prozessgas (G) wie in Fig. 1 gezeigt vorzugsweise rezykliert, indem es durch einen Staubabscheider (3) (beispielsweise einem Filter oder Zyklonabscheider) geleitet wird. Das Prozessgas (G) wird vor dem Eintritt in den Schachttrockner (2) weiterhin durch einen Kühler/Wasserabscheider (5) geleitet, wo es temperiert, getrocknet und durch Waschen gereinigt wird. Anschliessend wird das Prozessgas (G) vorzugsweise durch einen weiteren Staubabscheider (3) geleitet und mit Hilfe eine Temperiereinheit (4), beispielsweise ein Dampferhitzer, HTM-Erhitzer oder eine elektrische Heizvorrichtung, auf die gewünschte Temperatur gebracht, bevor das Prozessgas (G) wieder in den Schachttrockner (2) geleitet wird.

Schachttrockner sind hinlänglich bekannt und müssen an dieser Stelle nicht näher erläutert werden. Die vorliegende Erfindung ist nicht auf die in Fig. 1 gezeigte Apparatur eingeschränkt. Auch andere gängige, dem Fachmann bekannte Vorrichtungen können verwendet werden.

Beispiel 1:

In einen Gegenstromtrockner mit einem Querschnitt (A) von 0,26 m$^2$ und einer Produktschichthöhe (H) von 0,9 m (V=H$^2$/A= 3,1) wurde Polyamid 6-Granulat mit einer SAV von 2.3 sowie einer Feuchtigkeit (Wassergehalt) von 15,5 Gew.-% bei einem Durchsatz von 108 kg/h (Trockenbasis) und mit einer Temperatur von 20°C von oben zudosiert und vertikal von oben nach unten durch Einfluss der Schwerkraft bewegt. 520 m$^3$/h Stickstoff (bei 0°C und 1 bar) mit einer Temperatur von 165 °C und einem Wassergehalt von 4,9 Gew.-% (Taupunkt 40 °C) wurden unten über eine Serie von Kanälen, die für eine gleichmässige Gasverteilung sorgen, eingeführt und durchströmten den Trockner von unten nach oben, d. h. im Gegenstrom zum Granulat. Die Verweilzeit des Granulates im Trockner betrug 1,4 h. Das Granulat lief frei fliessend und verliess den Trockner mit beinahe der Gaseintrittstemperatur von 165 °C, einer SAV von 2,4 sowie einer Endfeuchtigkeit (Wassergehalt) von 0,30 Gew.-%. Das Gas wies beim Austritt aus dem oberen Bereich des Trockners eine Austrittstemperatur von 57 °C und einen Wassergehalt von 7,3 Gew.-% (Taupunkt 47 °C) auf. Die Leerrohrgeschwindigkeit des Gases im Trockner betrug 0.89 m/s bei 160 °C (Gaseintritt) und 0.66 m/s bei 50 °C (Gasaustritt). Das Granulat fing bei 530 m$^3$/h im Trockner an leicht zu fluidisieren, was gleichbedeutend mit dem Erreichen der Lockerungsgeschwindigkeit war. Das Verhältnis der Leerrohrgeschwindigkeit zur Lockerungsgeschwindigkeit betrug 0.98. Der Druckverlust über den gesamten Gegenstromapparat betrug 63 bis 68 mbar.

Beispiel 2:

Analog zur Vorgehensweise gemäss Beispiel 1 wurde Polyamid 6-Granulat mit einer SAV von 2.3 sowie einer Feuchtigkeit (Wassergehalt) von 15,5 Gew.-% bei einem Durchsatz von 96 kg/h (Trockenbasis) und mit einer Temperatur von 20 °C von oben dem Trockner zudosiert und vertikal von oben nach unten durch Einfluss der Schwerkraft bewegt. 480m$^3$/h Stickstoff (bei 0 °C und 1 bar) mit einer Temperatur von 155 °C und einem Wassergehalt von 10.8 Gew.-% (Taupunkt 54 °C) durchströmten den Trockner im Gegenstrom zum Granulat. Die Verweilzeit des Granulates im Trockner betrug 1,6 h. Das Granulat lief im oberen Teil des Trockners nicht frei fliessend, da es unter diesen Bedingungen bereits zu einer leichten Auskondensierung von Wasser an der Granulatoberfläche kam. Trotzdem verliess das Granulat den Trockner mit beinahe der Gaseintrittstemperatur von 155 °C, einer SAV von 2,5 und einer Endfeuchtigkeit (Wassergehalt) von 0,40 Gew.-%. Das Gas wies beim Austritt aus dem oberen Bereich des Trockners eine Austrittstemperatur von 55 °C und einen Wassergehalt von 13,1 Gew.-% (Taupunkt 57 °C) auf. Die Leerrohrgeschwindigkeit des Gases im Trockner betrug 0.80 m/s bei 155°C (Gaseintritt) und 0.62 m/s bei 55 °C (Gasaustritt). Das Verhältnis der Leerrohrgeschwindigkeit zur Lockerungsgeschwindigkeit betrug 0.91. Der Druckverlust über den gesamten Gegenstromapparat betrug 62 bis 67 mbar.

Beispiel 3 (Vergleich):

Analog zur Vorgehensweise gemäss Beispiel 1 wurde Polyamid 6-Granulat mit einer SAV von 2.3 sowie einer Feuchtigkeit (Wassergehalt) von 15,5 Gew.-% bei einem Durchsatz von 108 kg/h (Trockenbasis) und mit einer Temperatur von 20°C von oben dem Trockner zudosiert und vertikal von oben nach unten durch Einfluss der Schwerkraft bewegt. 480 m$^3$/h Stickstoff (bei 0 °C und 1 bar) mit einer Temperatur von 155°C und einem Wassergehalt von 10.8 Gew.-% (Taupunkt 54 °C) durchströmten den Trockner im Gegenstrom zum Granulat. Die Verweilzeit des Granulates im Trockner betrug 1,4 h. Das Granulat lief in der ersten Hälfte des Trockners nicht frei fliessend, da es zu einer signifikanten Auskondensation von Wasser an der Granulatoberfläche kam. Der Versuch musste abgebrochen werden. Das Gas hatte eine Austrittstemperatur von 50°C und einen geschätzten Wassergehalt von ca. 11,4 Gew.-% (Taupunkt 55 °C). Die Leerrohrgeschwindigkeit des Gases im Trockner betrug 0.80 m/s bei 155°C (Gaseintritt) und 0.62 m/s bei 50°C (Gasaustritt). Das Verhältnis der Leerrohrgeschwindigkeit zur Lockerungsgeschwindigkeit betrug 0.91.
Man erkennt anhand dieses Beispiels, dass bei Konditionierung eines auf Raumtemperatur befindlichen Polyamidgranulats, einer Feuchtigkeit (Wassergehalt) des Gases von mehr als 10 Gew.-% und bei einem mg/mp-Verhältnis von weniger als 6 das Verhältnis Leerrohrgeschwindigkeit zur Lockerungsgeschwindigkeit ($V_g/V_l$) nicht unter 1 liegen darf, soll eine Auskondensation des Prozessgases im ersten Reaktionsraum vermieden werden.

Beispiel 4 (Vergleich):

In einen Fliessbetttrockner mit Pulsator, einem Querschnitt von 0,3 m$^2$ und einer Produktschichthöhe von bis zu 0,2 m wurde Polyamid 6-Granulat mit einer SAV von 2.3 sowie einer Feuchtigkeit (Wassergehalt) von 16 Gew.-% bei einem Durchsatz von 103 kg/h (Trockenbasis) und mit einer Temperatur von 20°C zudosiert. Das Granulat floss in horizontaler Richtung entlang eines Lochblechs, durch welches Gas in den Trockner strömte. Die Schichthöhe wurde am Granulataustritt mit Hilfe einer Verstellplatte eingestellt. Der Pulsator lenkte das Gas abwechselnd durch zwei Hälften des Lochblechs, wodurch sich im gasdurchströmten Bereich eine Gasgeschwindigkeit einstellte, welche zur Verwirbelung des Granulats führte. 810m$^3$/h (bei 0 °C und 1 bar) Stickstoff mit einer Temperatur von 150 °C und einem Wassergehalt von 10,8 Gew.-% (Taupunkt 54 °C) strömten durch das Lochblech und heizten das Granulat auf. Die Schichthöhe und Verweilzeit betrugen 20 cm respektive 0,33 h. Das Granulat verliess den Trockner mit einer Temperatur von 104 °C und einer Endfeuchtigkeit (Wassergehalt) von 6,4 Gew.-%. Die Leerrohrgeschwindigkeit des Gases im Trockner betrug 2.32 m/s. Das Verhältnis der Leerrohrgeschwindigkeit zur Lockerungsgeschwindigkeit betrug 2.55.

Beispiel 5 (Vergleich):

Analog zur Vorgehensweise gemäss Beispiel 4 wurde Polyamid 6-Granulat mit einer SAV von 2.3 sowie einer Feuchtigkeit (Wassergehalt) von 16 Gew.-% bei einem Durchsatz von 69 kg/h (Trockenbasis) und mit einer Temperatur von 20°C zudosiert. 790 m$^3$/h (bei 0 °C und 1 bar) Stickstoff mit einer Temperatur von 170 °C und einem Wassergehalt von 8,6 Gew.-% (Taupunkt 50°C) strömten durch das Lochblech und heizten das Granulat auf. Die Schichthöhe und Verweilzeit betrugen 14 cm respektive 0,33 h. Das Granulat verliess den Trockner mit einer Temperatur von 132 °C und einer Endfeuchtigkeit (Wassergehalt) von 3,2 Gew.-%. Die Leerrohrgeschwindigkeit des Gases im Trockner betrug 2.37 m/s. Das Verhältnis der Leerrohrgeschwindigkeit zur Lockerungsgeschwindigkeit betrug 2.61.
Die Vergleichsbeispiele 4 und 5 zeigen, dass bei einem zu hohen Verhältnis von Leerrohrgeschwindigkeit zur Lockerungsgeschwindigkeit eine effiziente Trocknung des Granulats nicht möglich ist.

Beispiel 6 (Vergleich):

Polyamid 6-Granulat (SAV von 2.3, Feuchtigkeit von 15 Gew.-%) wurde analog zum vorstehenden Beispiel 5 vorgetrocknet und auf eine Temperatur von 122°C und eine Feuchtigkeit von 3,0 Gew.-% gebracht. Die SAV betrug dann 2,4. Anschliessend wurde das Granulat in einem Schachttrockner mit Gas im Gegenstrom behandelt. Der Schachttrockner hatte einem Durchmesser von 0,43 m, eine Schichthöhe von 4,4 m, und nur einem Gaseintritt ganz unten im Schachttrockner. Das Granulat trat mit einem Durchsatz von 40kg/h (Trockenbasis) in den Schachttrockner ein und wurde mit 108m$^3$/h Stickstoff mit einer Temperatur von 140°C und einem Wassergehalt vom 2,7 Gew.-% (Taupunkt 30°C) über 12,5h weiter behandelt. Beim Eintritt in den Schachttrockner fiel die Granulattemperatur aufgrund der Verdampfung des Restwassergehalts auf ca. 105°C, bevor es sich dann nach ca. 5,5h langsam wieder auf die Gaseintrittstemperatur von 140°C aufheizte. Die Produkttemperatur war somit erst nach ca. 2,3 m (H/D von 5,4) bei einem Massenverhältnis von 3,4 auf die Gaseintrittstemperatur angestiegen. Der Temperaturabfall im Schacht führt zu einer Verlangsamung des SAV-Anstiegs und der Trocknung. Beim Verlassen des Trockners hatte das Granulat eine SAV von 2,6 und eine Endfeuchtigkeit von 0,06 Gew.-%.

Beispiel 7 (Vergleich):

Analog zum vorstehenden Beispiel 6 wurde Polyamid 6-Granulat (SAV von 2.3, Feuchtigkeit von 15 Gew.-%) analog zum vorstehenden Beispiel 5 vorgetrocknet und auf eine Temperatur von 122°C und eine Feuchtigkeit von 4,0 Gew.-% gebracht. Die SAV betrug dann 2,4. Das Granulat trat mit einem Durchsatz von 45 kg/h (Trockenbasis) in den Schachttrockner ein und wurde mit 95 m$^3$/h Stickstoff mit einer Temperatur von 140 °C und einem Wassergehalt vom 2,7 Gew.-% (Taupunkt 30 °C) über 11 h weiter behandelt. Beim Eintritt in den Schachttrockner fiel die Granulattemperatur aufgrund der Verdampfung des Restwassergehalts auf ca. 68 °C, bevor es sich dann nach ca. 9,6 h langsam wieder auf die Gaseintrittstemperatur von 140 °C aufheizte. Die Produkttemperatur war somit erst nach ca. 4,6 m (H/D von 11) bei einem Massenverhältnis von 2,6 auf die Gaseintrittstemperatur angestiegen. Der Temperaturabfall im Schacht führt zu einer Verlangsamung des SAV-Anstiegs und der Trocknung. Beim Verlassen des Trockners hatte das Granulat eine SAV von 2,5 und eine Endfeuchtigkeit von 0,07 Gew.-%.

Beispiel 8:

Polyamid 6-Granulat wurde analog zum vorstehenden Beispiel 1 vorgetrocknet und auf eine Temperatur von 122°C und eine Feuchtigkeit von 1,0Gew.-% gebracht. Das Granulat trat mit einem Durchsatz von 40 kg/h (Trockenbasis) in den Schachttrockner ein und wurde mit 108 m$^3$/h Stickstoff mit einer Temperatur von 140 °C und einem Wassergehalt vom 2,7Gew.-% (Taupunkt 30 °C) über 9 h weiter behandelt. Beim Eintritt in den Schachttrockner fiel die Granulattemperatur aufgrund der Verdampfung des Restwassergehalts auf ca. 118 °C, bevor es sich dann nach ca. 4 h langsam wieder auf die Gaseintrittstemperatur von 140 °C aufheizte. Die Produkttemperatur war somit erst nach ca. 1,7m (H/D von 3,9) bei ein Massenverhältnis von 3,4 auf die Gaseintrittstemperatur angestiegen. Beim Verlassen des Trockners hatte das Granulat eine Endfeuchtigkeit von 0,06 Gew.-%.

Aufgrund der effizienteren Vorbehandlung des Polyamids (geringere Feuchtigkeit) kam es zu einer deutlich geringeren Abkühlung des Granulats beim Eintritt in den Schachttrockner. Die Behandlung war deshalb bereits nach einer deutlich kürzeren Zeit (9 h statt 11 h bzw. 12.5 h in den Beispielen 6 und 7) beendet.

Beispiel 9:

Polyamid 6-Granulat wurde analog zum vorstehenden Beispiel 1 vorgetrocknet und auf eine Temperatur von 122 °C und eine Feuchtigkeit von 0,5 Gew.-% gebracht. Das Granulat trat mit einem Durchsatz von 40 kg/h (Trockenbasis) in den Schachttrockner ein und wurde mit 108 m$^3$/h Stickstoff mit einer Temperatur von 140 °C und einem Wassergehalt vom 2,7 Gew.-% (Taupunkt 30 °C) über 7 h weiter behandelt. Beim Eintritt in den Schachttrockner trat kein Temperaturabfall auf. Das Granulat erwärmte sich vielmehr über einen Zeitraum von 2 h auf die Gaseintrittstemperatur von 140 °C. Die Produkttemperatur war somit erst nach ca. 0.8m (H/D von 2) bei einem Massenverhältnis von 3,4 auf die Gaseintrittstemperatur angestiegen. Beim Verlassen des Trockners hatte das Granulat eine Endfeuchtigkeit von 0,06 Gew.-%.

Aufgrund der effizienteren Vorbehandlung des Polyamids (geringere Feuchtigkeit) kam es zu keiner Abkühlung des Granulats beim Eintritt in den Schachttrockner. Die Behandlung war deshalb bereits nach einer deutlich kürzeren Zeit (7 h statt 11 h bzw. 12.5 h in den Beispielen 6 und 7) beendet.

Beispiel 10 (Vergleich):

Polyamid 6-Granulat mit einem Wassergehalt von 12,5 Gew.-% und einer Temperatur von 95 °C wurde bei einem Durchsatz von 5,3 t/h (Trockenbasis) in einem Fliessbett vorbehandelt. Das Granulat fiel danach mit einem Wassergehalt von 6,0 Gew.-% und einer Temperatur von 110°C in einen Schachttrockner. Der Schachttrockner hatte einen Durchmesser von 4,2 m und zwei Gaseintritte: ein Gaseintritt befand sich 12 m unter der Oberfläche des Materialbetts (H/D=2,85; Verweilzeit ca. 20 h). Ein weiterer Gaseintritt befand sich im Konus 9 m unterhalb des zweiten Konus (Verweilzeit 15h). Durch den oberen Gaseintritt wurden ca. 200 m$^3$/min N$_2$ bei 120 °C und einem Wassergehalt von ca. 3,7 Gew.-% (Taupunkt 35 °C) eingeleitet. Durch den zweiten, unteren Gaseintritt wurden 70m$^3$/min bei 120 °C und einem Wassergehalt von ca. 0,75 Gew.-% (Taupunkt 10 °C) eingeleitet. Der Druckverlust über dem Bett im obersten Teil betrug 250mbar und im untersten Teil ca. 50mbar. Beim Eintritt in den Schachttrockner fiel die Granulattemperatur wegen der Verdampfung des Restwassergehalts auf ca. 60°C, bevor sie dann nach 13h wieder auf die Gaseintrittstemperatur von 120 °C angestiegen war. Nach dem obersten Teil betrug die Produktfeuchtigkeit ca. 0,14 Gew.-%. Beim Verlassen des Trockners hatte das Granulat eine Endfeuchtigkeit von 0,05 Gew.-%.

**Beispiel 11:**

Das gemäss Beispiel 10 eingesetzte Polyamid 6-Granulat wurde in einem Gegenstromapparat mit einem Querschnitt von 14 m$^2$ und einer Produktschichthöhe von 1,0m (V= 0,07) behandelt. Das Granulat wurde im Gegenstromapparat mit 480m$^3$/min N$_2$ mit einer Temperatur von 130°C und einem Wassergehalt von ca. 3,7 Gew.-% (Taupunkt 35 °C) über eine Verweilzeit von 1,7 h behandelt. Die Leerrohrgeschwindigkeit betrug 0,8 m/s. Das Granulat verliess den Gegenstromapparat mit einer Temperatur von beinahe 130°C und einer Feuchtigkeit von 0,75 Gew.-%. Der Druckverlust über dem Bett betrug ca. 80 mbar.

Anschliessend wurde das Granulat in einen Schachttrockner von 2,0m Durchmesser, 15m zylindrischer Höhe (Verweilzeit 13h) mit einem Gaseintritt im Konus eingeleitet. Das Granulat wurde mit 32m$^3$/min N$_2$ mit einer Temperatur von 120 °C und einem Wassergehalt von ca. 3,7 Gew.-% (Taupunkt 35 °C) getrocknet. Die Granulattemperatur fiel langsam von 130°C auf ca. 120 °C kühlen. Bei Verlassen des Schachttrockners wies das Granulat eine Endfeuchtigkeit von 0,05 Gew.-% auf.

Aufgrund der effizienteren Vorbehandlung des Polyamids (geringere Feuchtigkeit) kam es zu praktisch keiner Abkühlung des Granulats beim Eintritt in den Schachttrockner. Die Behandlung war deshalb bereits nach einer deutlich kürzeren Zeit (13 h statt 20 h in Beispiel 10) beendet. Durch die erhöhte Temperatur während der Behandlungsstufe konnte zudem die erforderliche Gasmenge signifikant reduziert werden.

**Beispiel 12:**

Polyamid 6-Granulat mit einem Feuchtigkeitsgehalt von 15,0 Gew.-% wurde bei einem Durchsatz von 40kg/h (Trockenbasis) und mit einer Temperatur von 30 °C in den Gegenstromtrockner von Beispiel 1 eingeführt. 480 m$^3$/h (bei 0 °C und 1 bar) Stickstoff mit einer Temperatur von 130°C und einem Wassergehalt von 2,7 Gew.-% (Taupunkt 30 °C) heizten das Granulat auf. Die Betthöhe und Verweilzeit betrugen 0,4 m respektive 1,6 h. Das Granulat bewegte sich im Gegenstromtrockner frei fliessend und verliess den Trockner mit einer Temperatur von 130°C und einer Endfeuchtigkeit von 1,0 Gew.-%. Das Gas hatte eine Austrittstemperatur von 94 °C und einen Wassergehalt von 3,6 Gew.-% (Taupunkt 35 °C). Die Leerrohrgeschwindigkeit betrug 0.8m/s bei 130°C (Gaseintritt). Der Druckverlust über den gesamten Gegenstromapparat betrug ca. 40 mbar.

Das Granulat fiel anschliessend in einen Schachttrockner mit einem Durchmesser von 0,43 m und wurde darin mit 19 m$^3$/h Stickstoff mit einer Temperatur von 110°C und einem Wassergehalt von 2,7 Gew.-% (Taupunkt 10 °C) über 10 h weiter behandelt. Beim Eintritt in den Schacht sank die Granulattemperatur langsam auf 112 °C. Das Gas wurde im Schachtkonus eingespiesen. Beim Verlassen des Trockners hatte das Granulat eine Endfeuchtigkeit von 0,09 Gew.-%. Der Schachttrockner hatte eine elektrische Begleitheizung, um den auftretenden Wärmeverlust zu kompensieren.

**Beispiel 13:**

Polyamid 6-Granulat mit einem Feuchtigkeitsgehalt von 15,0 Gew.-% wurde bei einem Durchsatz von 40kg/h (Trockenbasis) und mit einer Temperatur von 30 °C in den Gegenstromtrockner von Beispiel 1 eingeführt. 480 m$^3$/h (bei 0 °C und 1 bar) Stickstoff mit einer Temperatur von 115 °C und einem Wassergehalt von 2,7 Gew.-% (Taupunkt 30 °C) heizten das Granulat auf. Die Betthöhe und Verweilzeit betrugen 0,7 m respektive 2,8 h. Das Granulat bewegte sich im Gegenstromtrockner frei fliessend und verliess den Trockner mit beinahe der Gaseintrittstemperatur von 115 °C und einer Endfeuchtigkeit von 1,0 Gew.-%. Das Gas hatte eine Austrittstemperatur von 85°C und einen Wassergehalt von 3,6 Gew.-% (Taupunkt 35°C). Die Leerrohrgeschwindigkeit betrug 0.76 m/s bei 115 °C (Gaseintritt). Der Druckverlust über den gesamten Gegenstromapparat betrug ca. 65 mbar.

Das Granulat fiel anschliessend in einen Schachttrockner mit einem Durchmesser von 0,43 m und wurde darin mit 19 m$^3$/h Stickstoff mit einer Temperatur von 110°C und einem Wassergehalt von 2,7 Gew.-% (Taupunkt 10 °C) über 10 h weiter behandelt. Beim Eintritt in den Schacht sank die Granulattemperatur geringfügig auf 98°C. Das Gas wurde im Schachtkonus eingespiesen. Beim Verlassen des Trockners hatte das Granulat eine Endfeuchtigkeit von 0,19 Gew.-%. Der Schachttrockner hatte eine elektrische Begleitheizung, um den auftretenden Wärmeverlust zu kompensieren.

**Beispiel 14:**

Polyamid 6-Granulat mit einem Feuchtigkeitsgehalt von 15,0 Gew.-% wurde bei einem Durchsatz von 60kg/h (Trockenbasis) und mit einer Temperatur von 30 °C in den Gegenstromtrockner von Beispiel 1 eingeführt. 450 m$^3$/h (bei 0 °C und 1 bar) Stickstoff mit einer Temperatur von 130°C und einem Wassergehalt von 8,6 Gew.-% (Taupunkt 50°C) heizten das Granulat auf. Die Betthöhe und Verweilzeit betrugen 0,4 m respektive 1,0 h. Das Granulat bewegte sich im Gegenstromtrockner frei fliessend und verliess den Trockner mit einer Temperatur von 129 °C und einer Endfeuchtigkeit von 1,0 Gew.-%. Das Gas hatte eine Austrittstemperatur von 80 °C und einen Wassergehalt von 10,0 Gew.-% (Taupunkt 53 °C). Die Leerrohrgeschwindigkeit betrug 0.70 m/s bei 130°C (Gaseintritt). Der Druckverlust über den gesamten Gegenstromapparat betrug ca. 40 mbar.

Das Granulat fiel anschliessend in einen Schachttrockner mit einem Durchmesser von 0,43 m und wurde darin mit 19 m$^3$/h Stickstoff mit einer Temperatur von 110°C und einem Wassergehalt von 2,7 Gew.-% (Taupunkt 10 °C) über 10 h weiter behandelt. Beim Eintritt in den Schacht sank die Granulattemperatur geringfügig auf 96 °C. Das Gas wurde im Schachtkonus eingespiesen. Beim Verlassen des Trockners hatte das Granulat eine Endfeuchtigkeit von 0,4 Gew.-%. Der Schachttrockner hatte eine elektrische Begleitheizung, um den auftretenden Wärmeverlust zu kompensieren.

**Patentansprüche**

1. Kontinuierliches Verfahren zur thermischen Behandlung eines Polyamids, umfassend die Schritte der Einführung von Polyamidpartikeln, welche einen Wassergehalt von 5 bis 20 Gew% bezogen auf das Trockengewicht der Partikel haben, in den oberen Bereich eines ersten Reaktionsraums und der Entnahme der Polyamidpartikel aus einem unteren Bereich des ersten Reaktionsraums, wobei die Polyamidpartikel als Schüttgut beim Austritt aus dem ersten Reaktionsraum eine Temperatur im Bereich von 100 bis 195°C und einen Wassergehalt von maximal 1 Gew.-%, bezogen auf das Trockengewicht des Schüttguts aufweisen, wobei die Polyamidpartikel während des gravimetrischen Absinkens durch den ersten Reaktionsraum im Gegenstrom mit einem Prozessgas kontaktiert werden, welches bei Eintritt in den ersten Reaktionsraum einen Wassergehalt von 0.8 bis 20 Gew.-%, bezogen auf das Gesamtgewicht des Prozessgases, sowie eine Temperatur von 100 bis 200 °C aufweist, **dadurch gekennzeichnet, dass** zumindest im unteren Bereich des ersten Reaktionsraumes das Verhältnis der Leerrohrgeschwindigkeit des Prozessgases zur Lockerungsgeschwindigkeit der Polyamidpartikel im Bereich von 0,7 bis 1.5 liegt und die Polyamidpartikel zumindest im unteren Bereich des ersten Reaktionsraumes als gelockertes Bett vorliegen, und dass das Verhältnis des Massenflusses des Prozessgases mg zum Massenfluss der Polyamidpartikel $m_p$ im Bereich von 3,0 bis 20,0 liegt und die vorstehenden Parameter so gewählt werden, dass es zu keiner Auskondensation des Prozessgases im oberen Bereich des ersten Reaktionsraums kommt.

2. Verfahren nach Anspruch 1, **dadurch gekennzeichnet, dass** die Polyamidpartikel nach Verlassen des ersten Reaktionsraumes in einen zweiten Reaktionsraum eingeleitet werden, in welchem sie mit einem Prozessgas im Gegenstrom kontaktiert werden, so dass die relative Lösungsviskosität (SAV) der Polyamidpartikel beim Verlassen des zweiten Reaktionsraumes in einem Bereich von 2 bis 6 liegt und im zweiten Reaktionsraum mindestens um einen Wert von grösser als 0,2 angestiegen ist.

3. Verfahren nach Anspruch 2, **dadurch gekennzeichnet, dass** es sich beim ersten und zweiten Reaktionsraum um unterschiedliche Bereiche desselben Reaktors handelt.

4. Verfahren nach Anspruch 2, **dadurch gekennzeichnet, dass** der erste und zweite Reaktionsraum in unterschiedlichen Reaktoren angeordnet sind.

5. Verfahren nach einem der Ansprüche 1 bis 4, **dadurch gekennzeichnet, dass** die Polyamidpartikel beim Eintritt in den ersten Reaktionsraum einen Monomergehalt von 0,3 bis 15 Gew.-%, bezogen auf das Trockengewicht des Polyamids, aufweisen.

6. Verfahren nach einem der Ansprüche 1 bis 5, **dadurch gekennzeichnet, dass** das Verhältnis der Leerrohrgeschwindigkeit des Prozessgases im oberen Bereich des ersten Reaktionsraums zur Lockerungsgeschwindigkeit der Polyamidpartikel im Bereich von 1,2 bis 4 liegt und die Polyamidpartikel zumindest im oberen Bereich des ersten Reaktionsraumes fluidisiert werden.

7. Verfahren nach einem der Ansprüche 1 bis 6, **dadurch gekennzeichnet, dass** die Verweilzeit der Polyamidpartikel im ersten Reaktionsraum im Bereich von 0,5 bis 5 h liegt.

8. Verfahren nach einem der Ansprüche 1 bis 7, **dadurch gekennzeichnet, dass** die Verweilzeit der Polyamidpartikel im zweiten Reaktionsraum im Bereich von 2 bis 30 h liegt.

9. Verfahren nach einem der Ansprüche 1 bis 8, **dadurch gekennzeichnet, dass** die Temperatur der Polyamidpartikel beim Eintritt in den ersten Reaktionsraum 10°C bis 110°C beträgt.

10. Verfahren nach einem der Ansprüche 1 bis 9, **dadurch gekennzeichnet, dass** es sich beim Prozessgas um Stickstoff handelt.

11. Verfahren nach einem der Ansprüche 1 bis 10, **dadurch gekennzeichnet, dass** der zweite Reaktionsraum zusätzlich mit Hilfe einer Heizvorrichtung erhitzt wird.

12. Verfahren nach einem der Ansprüche 1 bis 11, **dadurch gekennzeichnet, dass** im ersten Reaktionsraum ein Druckverlust von weniger als 150 mbar auftritt.

13. Verfahren nach einem der Ansprüche 1 bis 12, **dadurch gekennzeichnet, dass** das Verhältnis von Prozessgasmenge (mg) zur Menge an Schüttgutmaterial (mp) mg/mp im zweiten Reaktionsraum im Bereich von 0,05 bis 4,0 liegt.

**Claims**

1. Continuous process for thermally treating a polyamide, said process comprising the steps of introducing polyamide particles, which have a water content of 5% to 20% by weight, based on the dry weight of the polyamide, into the upper region of a first reaction space and removing the polyamide particles from a lower region of the first reaction space, wherein the polyamide particles, as a bulk material, at the exit from the first reaction space have a temperature in the range from 100 to 195°C and a moisture content of at most 1% by weight, based on the dry weight of the bulk material, wherein the polyamide particles gravimetrically descending through the first reaction space are countercurrently contacted with a process gas which on entry into the first reaction space has a water content of 0.8% to 20% by weight, based on the overall weight of the process gas, and also a temperature of 100 to 200 °C, **characterized in that** the ratio of the superficial space velocity of the process gas to the loosening velocity of the polyamide particles is in the range from 0.7 to 1.5, at least in the lower region of the first reaction space, and the polyamide particles are present as a loosened bed, at least in the lower region of the first reaction space, and **in that** the ratio of the mass flow of the process gas $m_g$ to the mass flow of the polyamide particles $m_p$ is in the range from 3.0 to 20.0, and the above parameters are chosen such that the process gas does not condense out in the upper region of the first reaction space.

2. Process according to Claim 1, **characterized in that** the polyamide particles leaving the first reaction space are directed into a second reaction space where they are contacted with a process gas in countercurrent so that the relative solution viscosity (SAV) of the polyamide particles leaving the second reaction space is in a range from 2 to 6, and has risen in the second reaction space by at least a value greater than 0.2.

3. Process according to Claim 2, **characterized in that** the first and second reaction spaces are different regions of the same reactor.

4. Process according to Claim 2, **characterized in that** the first and second reaction spaces are disposed in different reactors.

5. Process according to any of Claims 1 to 4, **characterized in that** the polyamide particles entering the first reaction space have a monomer content of 0.3% to 15% by weight, based on the dry weight of the polyamide.

6. Process according to any of Claims 1 to 5, **characterized in that** the ratio of the superficial space velocity of the process gas in the upper region of the first reaction space to the loosening velocity of the polyamide particles is in the range from 1.2 to 4, and the polyamide particles become fluidized, at least in the upper region of the first reaction space.

7. Process according to any of Claims 1 to 6, **characterized in that** the residence time of the polyamide particles in the first reaction space is in the range from 0.5 to 5 h.

8. Process according to any of Claims 1 to 7, **characterized in that** the residence time of the polyamide particles in the second reaction space is in the range from 2 to 30 h.

9. Process according to any of Claims 1 to 8, **characterized in that** the temperature of the polyamide particles on entry into the first reaction space is in the range from 10°C to 110°C.

10. Process according to any of Claims 1 to 9, **characterized in that** the process gas is nitrogen.

11. Process according to any of Claims 1 to 10, **characterized in that** the second reaction space is additionally heated by means of a heating device.

12. Process according to any of Claims 1 to 11, **characterized in that** a pressure drop of less than 150 mbar occurs in the first reaction space.

13. Process according to any of Claims 1 to 12, **characterized in that** the ratio of the amount of process gas (mg) to the amount of bulk material (mp) mg/mp in the second reaction space is in the range from 0.05 to 4.0.

**Revendications**

1. Procédé continu de traitement thermique d'un polyamide, comprenant les étapes d'introduction de particules de polyamide, qui ont une teneur en eau de 5 à 20 % en poids, par rapport au poids sec des particules, dans la zone supérieure d'une première chambre de réaction et le soutirage des particules de polyamide à partir d'une zone inférieure de la première chambre de réaction, les particules de polyamide présentant en tant que produit en vrac lors de la sortie de la première chambre de réaction une température dans la plage allant de 100 à 195 °C et une teneur en eau d'au plus 1 % en poids, par rapport au poids sec du produit en vrac, les particules de polyamide étant mises en contact à contre-courant avec un gaz de procédé pendant la descente gravimétrique dans la première chambre de réaction, qui présente lors de l'entrée dans la première chambre de réaction une teneur en eau de 0,8 à 20 % en poids, par rapport au poids total du gaz de procédé, et une température de 100 à 200 °C, **caractérisé en ce qu'**au moins dans la zone inférieure de la première chambre de réaction, le rapport entre la vitesse en tube vide du gaz de procédé et la vitesse de relâchement des particules de polyamide se situe dans la plage allant de 0,7 à 1,5, et les particules de polyamide se présentent au moins dans la zone inférieure de la première chambre de réaction sous la forme d'un lit relâché, et **en ce que** le rapport entre le débit massique du gaz de procédé $m_g$ et le débit massique des particules de polyamide $m_p$ se situe dans la plage allant de 3,0 à 20,0, et les paramètres précédents sont choisis de sorte qu'aucune condensation du gaz de procédé n'ait lieu dans la zone supérieure de la première chambre de réaction.

2. Procédé selon la revendication 1, **caractérisé en ce que** les particules de polyamide sont introduites après la sortie de la première chambre de réaction dans une deuxième chambre de réaction, dans laquelle elles sont mises en contact à contre-courant avec un gaz de procédé de sorte que la viscosité en solution relative (SAV) des particules de polyamide à la sortie de la deuxième chambre de réaction se situe dans une plage allant de 2 à 6, et soit augmentée au moins d'une valeur de plus de 0,2 dans la deuxième chambre de réaction.

3. Procédé selon la revendication 2, **caractérisé en ce que** la première et la deuxième chambre de réaction sont différentes zones du même réacteur.

4. Procédé selon la revendication 2, **caractérisé en ce que** la première et la deuxième chambre de réaction sont agencées dans différents réacteurs.

5. Procédé selon l'une quelconque des revendications 1 à 4, **caractérisé en ce que** les particules de polyamide présentent lors de l'entrée dans la première chambre de réaction une teneur en monomères de 0,3 à 15 % en poids, par rapport au poids sec du polyamide.

6. Procédé selon l'une quelconque des revendications 1 à 5, **caractérisé en ce que** le rapport entre la vitesse en tube vide du gaz de procédé dans la zone supérieure de la première chambre de réaction et la vitesse de relâchement des particules de polyamide se situe dans la plage allant de 1,2 à 4, et les particules de polyamide sont fluidisées au moins dans la zone supérieure de la première chambre de réaction.

7. Procédé selon l'une quelconque des revendications 1 à 6, **caractérisé en ce que** le temps de séjour des particules de polyamide dans la première chambre de réaction se situe dans la plage allant de 0,5 à 5 h.

8. Procédé selon l'une quelconque des revendications 1 à 7, **caractérisé en ce que** le temps de séjour des particules de polyamide dans la deuxième chambre de réaction se situe dans la plage allant de 2 à 30 h.

9. Procédé selon l'une quelconque des revendications 1 à 8, **caractérisé en ce que** la température des particules de polyamide lors de l'entrée dans la première chambre de réaction est de 10 °C à 110 °C.

10. Procédé selon l'une quelconque des revendications 1 à 9, **caractérisé en ce que** le gaz de procédé consiste en de l'azote.

11. Procédé selon l'une quelconque des revendications 1 à 10, **caractérisé en ce que** la deuxième chambre de réaction est en outre chauffée à l'aide d'un dispositif de chauffage.

12. Procédé selon l'une quelconque des revendications 1 à 11, **caractérisé en ce qu'**une perte de pression de moins 150 mbar a lieu dans la première chambre de réaction.

13. Procédé selon l'une quelconque des revendications 1 à 12, **caractérisé en ce que** le rapport entre la quantité de gaz de procédé (mg) et la quantité de matériau en vrac (mp) mg/mp dans la deuxième chambre de réaction se situe dans la plage allant de 0,05 à 4,0.

FIG. 1

**EP 2 671 902 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19510698 A1
- EP 1981931 B1
- WO 03062302 A1
- US 5597888 A
- WO 0139947 A1
- EP 2297228 B1
- US 4891420 A
- DE 19510698
- EP 0254367 A

- EP 0541674 A
- DE 2501348 A
- DE 2732328 A
- US 4376680 A
- EP 0284968 B1
- DE 4324616 A
- WO 9943407 A
- WO 2010094807 A
- DE 102005025972 A1

**In der Beschreibung aufgeführte Nicht-Patentliteratur**

- Modern Polyesters. Wiley, 2003, 143-244
- Lockerungsgeschwindigkeit können den VDI-Wärmeatlas. 1988

- Polyamide. Technische Thermoplaste. 1998, vol. 4